# EUROPÄISCHE PATENTSCHRIFT

(11) **EP 1 810 852 B1**
(45) Veröffentlichungstag und Bekanntmachung des Hinweises auf die Patenterteilung: **05.03.2008**
(21) Anmeldenummer: 06023288.1
(22) Anmeldetag: 09.11.2006
(51) Int. Cl.: B60D 5/00, B61D 17/22

(54) **Balg eines Übergangs zwischen zwei gelenkig miteinander verbundenen Fahrzeugen**
Bellows of a passage between two articulated vehicles
Soufflet d'un passage entre deux véhicules articulés

(30) Priorität: 19.01.2006 DE 102006002655
(43) Veröffentlichungstag der Anmeldung: 25.07.2007
(73) Patentinhaber: Hübner GmbH, 34123 Kassel (DE)
(72) Erfinder: Mosaner, Knud, 34127 Kassel (DE)
(74) Vertreter: Walther, Robert

(56) Entgegenhaltungen:
- EP-B1- 0 631 890
- DE-C1- 10 238 673
- DE-U1- 20 020 061
- US-A- 2 004 231

## Beschreibung

Die Erfindung betrifft einen Balg eines Übergangs zwischen zwei gelenkig miteinander verbundenen Fahrzeugen, wobei der Balg, umfassend Balgboden, Balgdach und Balgseitenwände, eine tunnelartige Röhre bildet, wobei der Balgboden lösbarer Bestandteil des Balges ist, wobei der Balg mehrere in Längsrichtung des Balges hintereinander angeordnete Rahmen aufweist, wobei der Balgboden mehrere hintereinander angeordnete Leisten besitzt.

Aus dem Gebrauchsmuster DE 91 13 821.3 U1 ist eine zusammengesetzte Strebe bekannt, wobei zwei Strebenteile durch ein Zwischenglied verbindbar sind, wobei zur Verbindung von Zwischenglied und Strebenteil jeweils formschlüssige Verbindungsmittel vorgesehen sind.

Die DE 43 13 330 C2 zeigt eine Klammer zur Verbindung von paarweise einander zugeordneten Wandelementen.

Die DE 1 257 822 B zeigt ebenfalls eine Klammer zur Fixierung von zwei Flanschen des Rahmens eines Schienen- oder Straßenfahrzeugs.

Die GB 2 413 833 A beschreibt eine Manschette zur Verbindung zweier Stangen.

Ein Balg der eingangs genannten Art ist beispielsweise aus der EP 0 631 890 B1 bekannt. Hierbei besitzt der Balg, der in diesem Fall als Faltenbalg ausgebildet ist, mehrere hintereinander angeordnete Rahmen, die den Faltenbalgstoff im Bereich ihrer Enden für jede Falte gesondert erfassen. Die Rahmen dienen der Stabilisierung des Balges.

Wie bereits zu eingangs erläutert, besteht der Balg aus Seitenwänden, Boden und Dach. Zur Aufnahme des Bodens durch den Balg weist der Balg im unteren Bereich sogenannte Übergangsbögen auf, das heißt, dass die Balgseitenwände im Bodenbereich durch eine Abwinklung von etwa 90 ° nach innen zu gerichtet sind, wobei der Boden durch den Balg im Bereich der Übergangsbögen lösbar aufnehmbar ist. Der Boden selbst umfasst vorteilhaft lediglich ein Tuch, das aus einem etwa gleichen Material hergestellt ist, wie das Balgdach und die Balgseitenwände, wobei das Tuch auf seiner Unterseite mehrere hintereinander angeordnete Schlaufen aufweist, durch die entsprechende Leisten aufnehmbar sind, wobei eine jede Leiste mit jeweils einem Rahmen verbunden ist.

Nach dem Stand der Technik ist zur Verbindung der Leisten und der Rahmen ein sogenanntes Verbindungsprofil vorgesehen, wobei das Verbindungsprofil mehrere Bohrungen aufweist, die mit Bohrungen sowohl in der jeweiligen Leiste als auch in dem jeweiligen Rahmen korrespondieren, und so eine formschlüssige Verbindung zwischen Rahmen und Leiste durch das Verbindungsprofil dadurch geschaffen wird, dass durch die übereinstimmenden Öffnungen beispielsweise Nieten oder Schrauben geschoben werden. Sowohl bei Verwendung von Nieten als auch bei Verwendung von Schrauben geht man von lösbaren Verbindungsmitteln aus.

Des Weiteren ist bekannt, eine jede Leiste mit einem Rahmen dadurch zu verbinden, dass die Leiste mit dem Rahmen ineinanderliegend überlappt und im Bereich der Überlappung ebenfalls zwei durchgehende Bohrungen vorgesehen sind, wobei die durchgehenden Bohrungen ebenfalls der Aufnahme von Schrauben oder Nieten dienen, um eine lösbare Verbindung in gleicher Weise wie zuvor beschrieben herzustellen.

Die Verbindung mit Nieten und Schrauben ist aufwändig, und zwar sowohl in Bezug auf die Montage als auch in Bezug auf die Demontage. Bei der Demontage gilt insbesondere zu berücksichtigen, dass der Nietkopf zum Lösen der Verbindung entweder abgeschert oder abgebohrt werden muss, wohingegen bei einer Verschraubung zu berücksichtigen ist, dass die Schraube erhöhter Verschmutzung unterliegt, weshalb nach einiger Zeit kaum mehr davon auszugehen ist, dass sich eine derartige Schraubverbindung lösen lässt.

Eine weitere bekannte Möglichkeit der Verbindung besteht insofern, als im Überlappungsbereich zwischen Rahmen und Leiste durch die dort vorhandenen durchgehenden Öffnungen Bolzen geschoben werden, wobei die Bolzen im Endbereich eine umlaufende nutartige Vertiefung aufweisen, wobei über die Vertiefung ein Federblech geschoben wird, das ein Herausziehen der Kopfbolzen verhindert.

Das Federblättchen, das über die Enden der Kopfbolzen in die dafür vorgesehene Nut in den Kopfbolzen eingeschoben wird hat den Nachteil, dass sich dieses insbesondere dann, wenn es die Nut nicht richtig erfasst, leicht abziehen lässt. Darüber hinaus hat sich herausgestellt, dass bei Kurvenfahrt, wenn die einzelnen Falten des Balges und mithin die einzelnen Rahmen sich aneinander reiben, dieses Federblättchen trotz korrekter Montage abgeschoben wird, und sich insofern die Verbindung zwischen Leiste und Rahmen löst.

Der Erfindung liegt daher die Aufgabe zugrunde, einen Balg eines Übergangs der eingangs genannten Art bereitzustellen, bei dem der Boden in einfacher und preiswerter Weise mit dem Balg verbindbar ist, und wobei darüber hinaus sichergestellt ist, dass die Verbindung jeweils zwischen Rahmen und Leiste dauerhaft aber dennoch leicht lösbar ist.

Die Aufgabe wird erfindungsgemäß dadurch gelöst, dass zur Verbindung jeweils eines Rahmens mit einer Leiste eine den Rahmen und die Leiste erfassende Federspange vorgesehen ist, wobei die Federspange mindestens einen Ansatz zum formschlüssigen Verbinden von Rahmen und Leiste aufweist. Hieraus wird deutlich, dass eine solche Spange von unten über die durch sie erfasste Leiste und den Rahmen geschoben wird und durch die Spange Rahmen und Leiste formschlüssig verbunden sind. Die Spange ist vorteilhaft als Federspange ausgebildet, wobei durch die federnde Ausbildung der Spange sichergestellt ist, dass die Spange die formschlüssige Verbindung selbständig aufrecht erhält. Als Mittel zum formschlüssigen Erfassen von Rahmen ist ein Ansatz vorgesehen, der in eine entsprechende Bohrung in Rahmen und Leiste durchdringt, wobei durch die federnde Ausbildung der Spange sichergestellt ist, dass dieser Ansatz in der entsprechenden Bohrung verbleibt und so die formschlüssige Verbindung aufrecht erhält.

Im Einzelnen ist vorgesehen, dass zur Verbindung der jeweiligen Rahmen und Leisten, die jeweils ineinanderliegend einander überlappen, im Bereich der Überlappung sowohl der jeweilige Rahmen als auch die jeweilige Leiste mindestens eine durchgehende Bohrung zur Aufnahme mindestens eines Mittels an der Spange zum formschlüssigen Erfassen von Rahmen und Leiste aufweisen, wobei das Mittel, wie bereits ausgeführt, nach Art eines Ansatzes ausgebildet ist. Das bedeutet, dass im Bereich der übereinanderliegenden Überlappung von Rahmen und Leiste mindestens eine durchgängige Bohrung vorgesehen ist, in die durch die federnde Spange der oder die Ansätze eingedrückt gehalten werden, und so die formschlüssige Verbindung aufrecht erhalten wird. In Bezug auf die Anordnung der Mittel zum formschlüssigen Erfassen von Rahmen und Leiste ist im Einzelnen vorgesehen, dass diese vorteilhaft in etwa U-profilartig gebogene Spange jeweils im Bereich der Schenkel aufeinander zu gerichtet das Mittel zum formschlüssigen Erfassen von Rahmen und Leiste aufweist.

Sowohl der Rahmen als auch die Leiste sind im Querschnitt U-profilförmig ausgebildet, wobei der Rahmen vorteilhaft die Leiste in dem Rahmen anliegend überlappend aufnimmt. Der oder die Ansätze durchragen hierbei die jeweiligen Schenkel von Rahmen und Leiste.

Als besonders praktisch hat sich herausgestellt, wenn die Spange zu beiden Enden an den Schenkeln aufeinander zu gerichtete Ansätze in Form von Flügeln aufweist, die durch die entsprechenden durchgehenden Bohrungen von Rahmen und Leiste eingreifen und so die formschlüssige Verbindung zwischen Rahmen und Leiste bewirken. Die Flügel können hierbei zu beiden Enden angeordnete Fortsätze an den Schenkeln der Spange sein, die, um in Eingriff mit den entsprechenden Bohrungen gebracht zu werden, rechtwinklig aufeinander zu gebogen, also Bestandteil der Schenkel der Spange sind. Anstelle von Flügeln können vorteilhaft auch Ansätze vorgesehen sein, die bogenförmig ausgebildet sind. Hierzu ist bei der Herstellung der Spange zu jeder Seite des Schenkels der Spange ein T-förmiger Ansatz vorgesehen, der jeweils auf den anderen Schenkel zugerichtet wird, und der Querschenkel des T-förmigen Ansatzes bogenförmig gebogen wird, so dass sich ein kreisbogenförmiger Ansatz ergibt, der jedoch als Kreis nicht gänzlich geschlossen ist.

Um nun die Spange auf den Rahmen aufsetzen zu können, ist ein zangenförmiges Werkzeug vorgesehen, das die Schenkel der Spange spreizbar erfasst. In diesem Zusammenhang weisen die Schenkel der Spange vorteilhaft zwei einander gegenüberliegende Öffnungen für eine solche Zange, insbesondere eine Seegeringzange auf.

Anhand der Zeichnungen wird die Erfindung nachstehend beispielhaft näher erläutert.

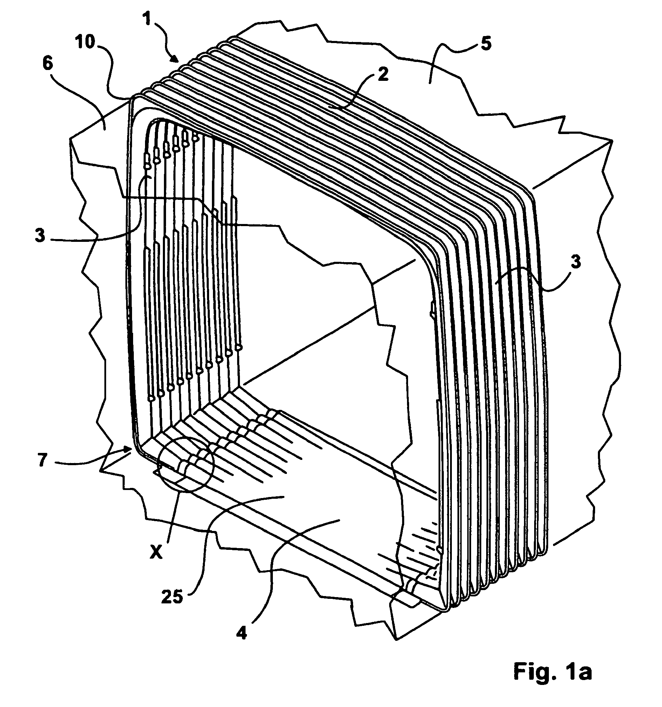

- Fig. 1a: zeigt hierbei in perspektivischer Darstellung einen Balg mit angedeuteten Fahrzeugteilen zu beiden Seiten des Balges;
- Fig. 1 b: zeigt den Ausschnitt X aus Fig. 1 a in stark vergrößerter Darstellung;
- Fig. 2a: zeigt die Federspange in einer ersten Ausführungsform in perspektivischer Darstellung mit seitlich angeordneten Laschen;
- Fig. 2b: zeigt eine Darstellung einer Federspange gemäß Fig. 2a, wobei anstelle der seitlich angeordneten Laschen Öffnungen vorgesehen sind;
- Fig. 3: zeigt Rahmen und Leiste in Vorbereitung zur Montage sowie die durch die Seegeringzange gehaltene Federspange;
- Fig. 4: zeigt in Weiterführung von Fig. 3 die Federspange mit den flügelartigen Ansätzen kurz vor Eingriff in die dafür vorgesehenen Bohrungen in Rahmen und Leiste;
- Fig. 5: zeigt die fertige Verbindung;
- Fig. 6: zeigt eine weitere Ausführungsform einer Federspange mit stiftförmigen Ansätzen.
- Fig. 7a-7c: zeigen eine weitere Ausführungsform einer Spange in drei Ansichten.

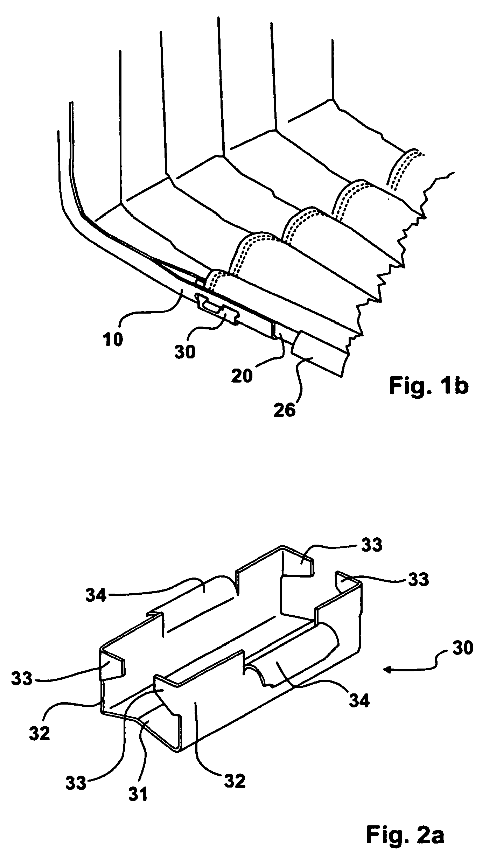

Bei der Darstellung gemäß Fig. 1 a ist der Balg mit 1 bezeichnet, wobei der Balg ein Balgdach 2 und Balgseitenwände 3 sowie den Balgboden 4 aufweist. Der Balg 1 ist das Bindeglied zwischen den beiden Fahrzeugteilen 5 und 6, die lediglich angedeutet sind.

Im Übergang von den Balgseitenwänden 3 zum Balgboden 4 sind sogenannte Übergangsbögen 7 vorgesehen, die sich als nahezu rechtwinklige Abwinklungen der Balgseitenwände in Richtung auf den Balgboden 4 darstellen. Dargestellt ist in Fig. 1a ein sogenannter Faltenbalg. Hierbei sind die einzelnen Falten durch Rahmen 10 eingefasst, die im Wesentlichen U-förmig ausgebildet sind, und die zwei aufeinander zu laufende Tücher einer Falte klemmend erfassen, wie dies Stand der Technik ist. Insofern weist ein solcher Rahmen, bis auf die Übergangsbögen, ein im Querschnitt in etwa U-förmiges Profil auf. Im Bereich des Übergangsbogens 7 im Übergang zum Balgboden 4 weist der Rahmen einen Ansatz 11 auf, der keinen Stoff einer Falte mehr erfasst. Im Bereich dieses Ansatzes 11 lagert nun die Leiste 20 des Bodens 4 in dem Rahmen 10. Der Boden 4 umfasst ein Bodentuch 25, wobei das Bodentuch 25 auf seiner Unterseite Schlaufen 26 aufweist, die der Aufnahme der Leisten 20 dienen. Entsprechend der Anzahl der Rahmen 10 existiert eine entsprechende Anzahl von Leisten 20, da eine jede Leiste 20 mit einem jeden Rahmen 10 des Balges zu verbinden ist. Zwischen Bodentuch 25 und Faltenstoff ist ein Klettbandverschluss 27 vorgesehen (Fig. 1b).

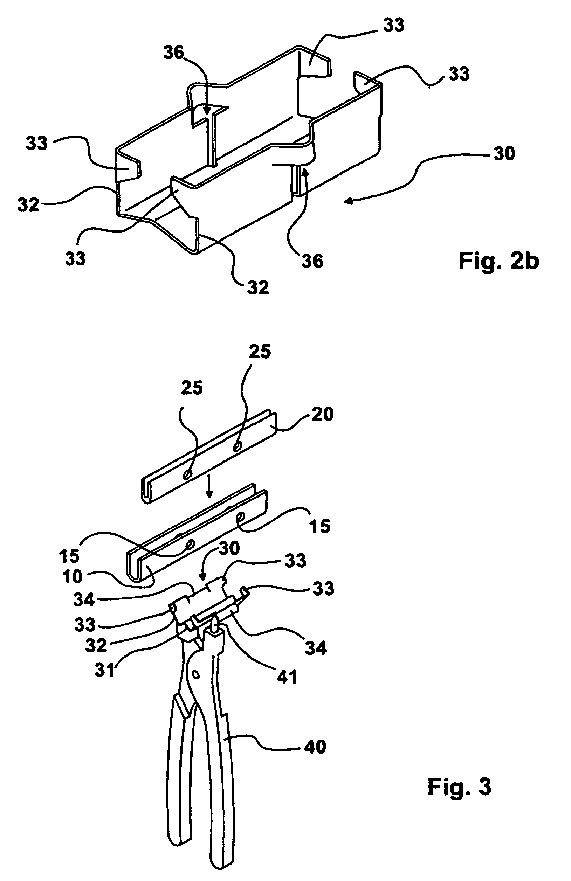

Die Art der Verbindung zwischen dem Rahmen 10 und der Leiste 20 ergibt sich im Einzelnen aus den Darstellungen gemäß den Fig. 3 bis 5. Die Verbindung des Rahmens 10 mit der Leiste 20 erfolgt durch die bereits zuvor beschriebenen Federspangen. Eine solche Federspange in perspektivischer Darstellung ergibt sich in einer Ausführungsform aus Fig. 2a. Die dort dargestellte Spange entspricht der Spange gemäß Fig. 3, wobei diese Spange im Bereich ihrer Schenkel jeweils eine Lasche 34 zum Ansetzen für die Zange 40 aufweist. Die mit 30 bezeichnete U-förmige Spange besitzt den Steg 31 und die beiden Schenkel 32, wobei endseitig ein jeder Schenkel jeweils einen flügelförmigen Ansatz 33 aufweist, wobei die Ansätze 33 aufeinander zu gerichtet sind. Durch die Ausbildung der Spange aus Federstahl können die Schenkel 32 gespreizt werden, wie sich dies beispielsweise aus Fig. 3 ergibt. Um die Spange zu spreizen, besitzt die Spange im Bereich der Schenkel 32 bogenförmig ausgebildete Laschen 34, in die die Seegeringzange 40 mit ihren Armen 41 eingreift, wie sich dies ebenfalls aus Fig. 3 ergibt. Bei der Darstellung einer Spange gemäß Fig. 2b besteht der Unterschied zu der Spange gemäß Fig. 2a ausschließlich darin, dass dort anstelle der besagten Lasche 34 eine Öffnung 36 vorgesehen ist, die durch eine Ausbauchung eines Teils des Schenkels 32 herstellbar ist.

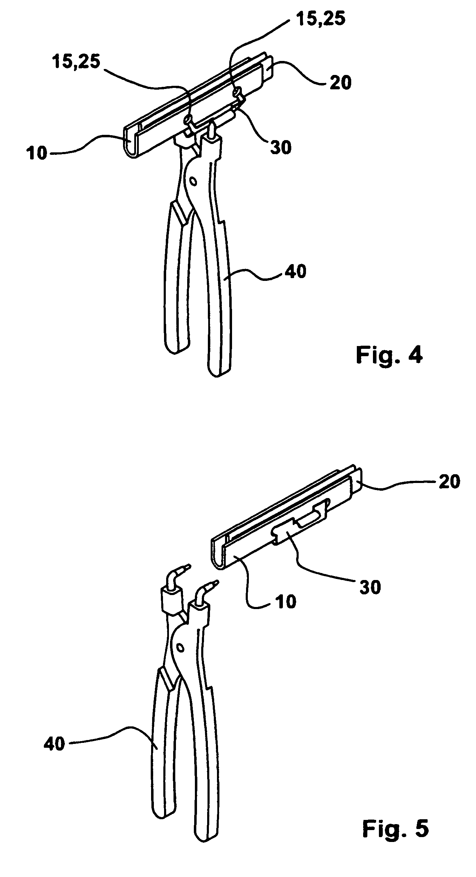

Die Art der Verbindung des Rahmens 10 mit der Leiste 20 ergibt sich anschaulich aus den Fig. 3 bis 5, wie bereits zuvor erwähnt; hierbei wird die Federspange 30 zunächst gespreizt, wie in Fig. 3 dargestellt, um dann die flügelartigen Ansätze 33 in den Bereich der Öffnungen 15, 25 zu bringen, wobei nach Zusammenschnappen der Federspange 30 die Ansätze 33 in diesen Öffnungen 15, 25 einliegen und hierdurch für eine formschlüssige Verbindung zwischen Rahmen 10 und Leiste 20 sorgen. Die fertige Verbindung ergibt sich aus Fig. 5.

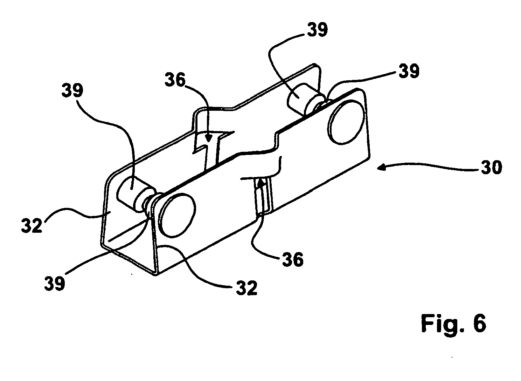

Eine andere Variante einer Federspange ist in Fig. 6 dargestellt, wobei anstelle der flügelartigen Fortsätze, wie in Fig. 2a bzw. Fig. 2b gezeigt, dort stiftartige Ansätze 39 an den Schenkeln 32 vorgesehen sind. Die Aufnahme für die Zange ist bei der Ausführungsform gemäß Fig. 6 die gleiche wie bei Fig. 2b und insofern auch gleich mit 36 bezeichnet.

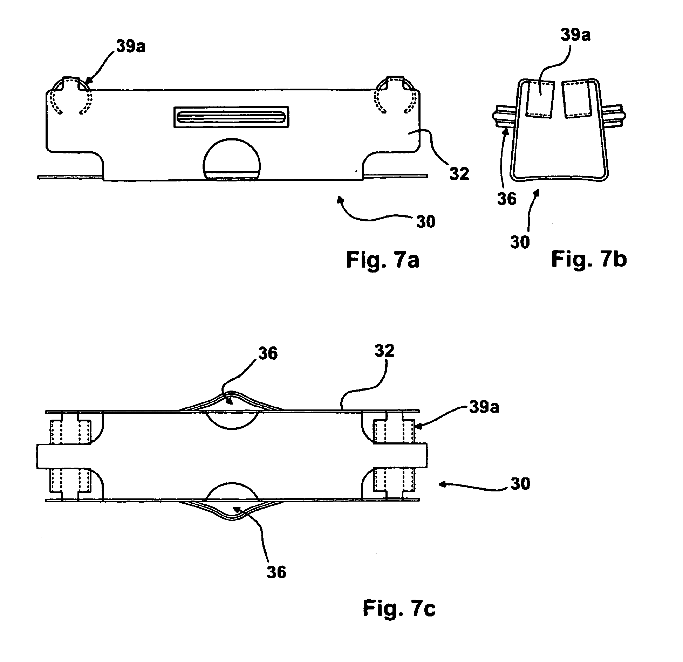

Eine weitere Variante einer Federspange ist in Fig. 7a bis 7c dargestellt, wobei dort stiftartige Ansätze 39a vorgesehen sind, die jeweils zu beiden Enden an den Schenkeln 32 der Spange angeordnet sind. Hierbei ist zu jeder Seite des Schenkels der Spange jeweils ein nach oben gerichteter T-förmiger Ansatz vorgesehen, der bei der Herstellung der Spange mit ausgestanzt wird. Die insgesamt vier T-förmigen Ansätze werden dann aufeinander zugebogen und anschließend der Querbalken des T-förmigen Ansatzes kreisbogenförmig gebogen, so dass sich paarweise stiftartige Ansätze 39a ergeben, die aufeinander zugerichtet sind. Im Übrigen sind in Bezug auf die Bezugszeichen, diese für gleiche Teile dieselben wie in den vorstehend beschriebenen Figuren.

## Patentansprüche

1. Balg (1) eines Übergangs zwischen zwei gelenkig miteinander verbundenen Fahrzeugen (5, 6), wobei der Balg (1), umfassend Balgboden (4), Balgdach (2) und Balgseitenwände (3), eine tunnelartige Röhre bildet, wobei der Balgboden (4) lösbarer Bestandteil des Balges (1) ist, wobei der Balg (1) mehrere in Längsrichtung des Balges (1) hintereinander angeordnete Rahmen (10) aufweist, wobei der Balgboden (4) mehrere hintereinander angeordnete Leisten (20) besitzt,
**dadurch gekennzeichnet,**
**dass** zur Verbindung jeweils eines Rahmens (10) mit einer Leiste (20) eine den Rahmen und die Leiste erfassende Federspange (30) vorgesehen ist, wobei die Federspange (30) mindestens einen Ansatz (33) zum formschlüssigen Erfassen von Rahmen (10) und Leiste (20) aufweist.

2. Balg eines Übergangs zwischen zwei gelenkig miteinander verbundener Fahrzeuge nach Anspruch 1,
**dadurch gekennzeichnet,**
**dass** zur Verbindung der Rahmen (10) und Leisten (20) diese jeweils ineinanderliegend einander überlappen, wobei im Bereich der Überlappung sowohl der jeweilige Rahmen (10) als auch die jeweilige Leiste (20) mindestens eine durchgehende Bohrung (15, 25) zur Aufnahme des mindestens einen Ansatzes (33) der Spange (30) zum formschlüssigen Erfassen von Rahmen (10) und Leiste (20) aufweisen.

3. Balg eines Übergangs zwischen zwei gelenkig miteinander verbundener Fahrzeuge nach Anspruch 2,
**dadurch gekennzeichnet,**
**dass** die Spange (30) im Querschnitt in etwa U-profilartig gebogen ist, dass die zwei Schenkel (32) aufweist, wobei die Schenkel (32) jeweils die aufeinander zu gerichteten Ansätze (33) zum formschlüssigen Erfassen von Rahmen (10) und Leiste (20) aufweisen.

4. Balg eines Übergangs zwischen zwei gelenkig miteinander verbundener Fahrzeuge nach einem der voranstehenden Ansprüche,
**dadurch gekennzeichnet,**
**dass** der Ansatz (33) nach Art eines Stiftes ausgebildet ist.

5. Balg eines Übergangs zwischen zwei gelenkig miteinander verbundener Fahrzeuge nach einem der voranstehenden Ansprüche
**dadurch gekennzeichnet,**
**dass** der Ansatz (33) nach Art eines Flügels ausgebildet ist.

6. Balg eines Übergangs zwischen zwei gelenkig miteinander verbundener Fahrzeuge nach einem der voranstehenden Ansprüche,
**dadurch gekennzeichnet,**
**dass** die Spange (30) zu beiden Enden an den Schenkeln (32) jeweils aufeinander zu gerichtete Ansätze (33) aufweist, insbesondere in Form von Flügeln, die durch entsprechende durchgehende Bohrungen (15, 25) in Rahmen (10) und Leiste (20) eingreifen und so eine formschlüssige Verbindung zwischen Rahmen (10) und Leiste (20) bewirken.

7. Balg eines Übergangs zwischen zwei gelenkig miteinander verbundener Fahrzeuge nach einem der voranstehenden Ansprüche,
**dadurch gekennzeichnet,**
**dass** die Schenkel (32) der Spange (30) durch ein zangenförmiges Werkzeug (40) spreizbar sind.

8. Balg eines Übergangs zwischen zwei gelenkig miteinander verbundener Fahrzeuge nach einem der voranstehenden Ansprüche,
**dadurch gekennzeichnet,**
**dass** die Schenkel (32) der Spange (30) zwei gegenüberliegende Öffnungen (36) oder Laschen für eine Seegeringzange (40) aufweisen.

## Claims

1. A bellows (1) of a connection between two hinge-linked vehicles (5, 6), said bellows (1), which comprises a bellows bottom (4), a bellows roof (2) and bellows side walls (3), forming a tunnel-like tube, said bellows bottom (4) being a removable constituent part of said bellows (1), said bellows (1) having a plurality of frames (10) disposed one behind the other in the longitudinal direction of said bellows (1), said bellows bottom (4) having a plurality of ledges (20) disposed one behind the other,
**characterized in**
**that**, to connect a respective one of a frame (10) with a ledge (20), there is provided a spring cramp (30) taking hold of the frame and the ledge, said spring cramp (30) having at least one shoulder (33) for matingly connecting frame (10) and ledge (20).

2. The bellows of a connection between two hinge-linked vehicles as set forth in claim 1,
**characterized in**
**that**, to connect the frames (10) and the ledges (20), these are lying inside each other and overlap each other, both a respective one of the frames (10) and a respective one of the ledges (20) having in the region of the overlap at least one through hole (15, 25) for receiving the at least one shoulder (33) of the cramp (30) for shape-matingly taking hold of frame (10) and ledge (20).

3. The bellows of a connection between two hinge-linked vehicles as set forth in claim 2,
**characterized in**
**that** the cramp (30) is bent to an approximately U-shaped profile in cross section, that it comprises two legs (32), said legs (32) comprising each the shoulders (33) directed toward each other for shape-matingly taking hold of frame (10) and ledge (20).

4. The bellows of a connection between two hinge-linked vehicles as set forth in any one of the afore mentioned claims,
**characterized in**
**that** the shoulder (33) is configured like a pin.

5. The bellows of a connection between two hinge-linked vehicles as set forth in any one of the afore mentioned claims,
**characterized in**
**that** the shoulder (33) is configured like a wing.

6. The bellows of a connection between two hinge-linked vehicles as set forth in any one of the afore mentioned claims,
**characterized in**
**that**, at either ends of the legs (32), the cramp (30) has shoulders (33) directed toward each other and more specifically configured in the form of wings that engage through corresponding through holes (15, 25) in frame (10) and ledge (20), thus effecting a shape-mating connection between frame (10) and ledge (20).

7. The bellows of a connection between two hinge-linked vehicles as set forth in any one of the afore mentioned claims,
**characterized in**
**that** the legs (32) of the cramp (30) are adapted to be urged apart by a pliers-shaped tool (40).

8. The bellows of a connection between two hinge-linked vehicles as set forth in any one of the afore mentioned claims,
**characterized in**
**that** the legs (32) of the cramp (30) have two confronting openings (36) or clips for circlip ring pliers (40).

## Revendications

1. Soufflet (1) d'une intercirculation entre deux véhicules articulés (5, 6), le soufflet (1) comportant un plancher (4), un toit (2) et des parois latérales (3) formant un tube du type tunnel, le plancher (4) étant une partie détachable constitutive du soufflet (1), le soufflet (1) comportant plusieurs cadres (10) disposés l'un derrière l'autre dans le sens de la longueur du soufflet (1), le plancher (4) possédant plusieurs baguettes (20) disposées l'une derrière l'autre,
**caractérisé en ce**
**que**, pour relier respectivement un cadre (10) à une baguette (20), il est prévu une agrafe ressort (30) saisissant le cadre et la baguette, l'agrafe ressort (30) comportant au moins un appendice (33) destiné à relier, par coopération de formes, le cadre (10) et la baguette (20).

2. Soufflet d'une intercirculation entre deux véhicules articulés selon la revendication 1,
**caractérisé en ce**
**que**, pour relier les cadres (10) et les baguettes (20), ceux-ci s'emboîtent en se chevauchant, tant le cadre respectif (10) que la baguette respective (20) comportant à la hauteur du chevauchement au moins un trou traversant (15, 25) destiné à recevoir l'au moins un appendice (33) de l'agrafe (30) destiné à saisir par coopération de formes le cadre (10) et la baguette (20).

3. Soufflet d'une intercirculation entre deux véhicules articulés selon la revendication 2,
**caractérisé en ce**
**que** l'agrafe (30) a une section en forme approximative de profil U, qu'elle comporte deux branches (32), les branches (32) comportant chacune les appendices (33) dirigés l'un vers l'autre et destinés à saisir par coopération de formes le cadre (10) et la baguette (20).

4. Soufflet d'une intercirculation entre deux véhicules articulés selon l'une quelconque des revendications précédentes,
**caractérisé en ce**
**que** l'appendice (33) est conformé en forme de doigt.

5. Soufflet d'une intercirculation entre deux véhicules articulés selon l'une quelconque des revendications précédentes,
**caractérisé en ce**
**que** l'appendice (33) est conformé en forme d'aile.

6. Soufflet d'une intercirculation entre deux véhicules articulés selon l'une quelconque des revendications précédentes,
**caractérisé en ce**
**que** l'agrafe (30) comporte aux deux extrémités de ses branches (32) des appendices (33), notamment en forme d'ailes, orientées l'une vers l'autre, ces ailes s'engageant au travers de trous traversants (15, 25) correspondants pratiqués dans le cadre (10) et la baguette (20), réalisant ainsi la liaison par coopération de formes entre le cadre (10) et la baguette (20).

7. Soufflet d'une intercirculation entre deux véhicules articulés selon l'une quelconque des revendications précédentes,
**caractérisé en ce**
**que** les branches (32) de l'agrafe (30) peuvent être écartées par un outil (40) en forme de pince.

8. Soufflet d'une intercirculation entre deux véhicules articulés selon l'une quelconque des revendications précédentes,
**caractérisé en ce**
**que** les branches (32) de l'agrafe (30) comportent, situées en regard l'une de l'autre, deux ouvertures (36) ou pattes pour une pince à circlips (40).
